# EUROPÄISCHE PATENTSCHRIFT

(11) **EP 3 799 527 B1**
(45) Veröffentlichungstag und Bekanntmachung des Hinweises auf die Patenterteilung: **04.03.2026**
(21) Anmeldenummer: 20194033.5
(22) Anmeldetag: 02.09.2020
(51) Int. Cl.: H05B 6/12, H05B 6/06

(54) **INDUKTIONSKOCHFELD UND VERFAHREN ZUR STEUERUNG EINES INDUKTIONSKOCHFELDS**
INDUCTION HOB AND METHOD FOR CONTROLLING AN INDUCTION HOB
PLAQUE DE CUISSON À INDUCTION ET PROCÉDÉ DE COMMANDE D'UNE PLAQUE DE CUISSON À INDUCTION

(30) Priorität: 27.09.2019 DE 102019214910
(43) Veröffentlichungstag der Anmeldung: 31.03.2021
(73) Patentinhaber: E.G.O. Elektro-Gerätebau GmbH, 75038 Oberderdingen (DE)
(72) Erfinder: Dalaker, Timo, 75038 Oberderdingen (DE); Fuchs, Etienne, 68789 St. Leon-Rot (DE); Lomp, Stephane, 75038 Oberderdingen (DE); Mohr, Wolfgang, 75248 Ölbronn-Dürrn (DE); Stöffler, Michael, 75433 Maulbronn (DE); Bäumges, Kay David, 75446 Wiernsheim (DE); Grub, Tobias, 76707 Hambrücken (DE)
(74) Vertreter: Patentanwälte Ruff, Wilhelm, Beier, Dauster & Partner mbB

(56) Entgegenhaltungen:
- EP-A1- 2 194 754
- EP-A1- 2 312 908
- EP-A1- 3 021 639
- EP-A1- 3 026 981
- EP-A1- 3 490 339
- DE-A1- 102006 043 182
- US-A1- 2015 034 630

## Beschreibung

### ANWENDUNGSGEBIET UND STAND DER TECHNIK

Die Erfindung betrifft ein Induktionskochfeld.

Bei Induktionskochfeldern ist es technisch bereits mit einer einzigen Induktionsheizspule an sich möglich, die Anwesenheit eines Topfes oberhalb der Induktionsheizspule bzw. auf einer durch die Induktionsheizspule definierten Kochstelle festzustellen, solange der Topf an sich überhaupt für eine induktive Beheizung geeignet ist. Bei modernen Induktionskochfeldern, beispielsweise entsprechend der EP 2 670 211 A2, soll es nun aber durch eine Vielzahl verteilter Induktionsheizspulen möglich sein, nicht nur stets mit genau einem Topf auf genau einer Kochstelle mit genau einer Induktionsheizspule zu kochen. Dazu ist eine Vielzahl von deutlich kleineren Induktionsheizspulen vorgesehen, von denen beispielsweise fünf oder sieben bei entsprechend ausreichender Bedeckung von einem Topf dann gemeinsam für diesen Topf quasi eine Kochstelle bilden und den Topf beheizen. Da aber bei einem solchen Induktionskochfeld gewünscht wird, die Töpfe an beliebiger Stelle aufstellen zu können, kann es unter Umständen nicht ausreichen, bei benachbarten Induktionsheizspulen aufgrund des Umstands, dass festgestellt worden ist, dass ein Topf aufgestellt worden ist, diese als sozusagen gemeinsam zu betreibende Kochstelle aufzufassen und dann mit gemeinsamer gleichartiger Leistung zu beaufschlagen. Deswegen schlägt die EP 2 670 211 A2 vor, zusätzliche Sensoren zur Topferkennung vorzusehen und dabei eine große Anzahl davon am Induktionskochfeld verteilt anzuordnen.

Aus der EP 3 026 981 A1 ist es bekannt, bei einem solchen Induktionskochfeld die Sensorspulen gerade so anzuordnen, dass über jedem Nachbarbereich, den zwei benachbarte Induktionsheizspulen mit ihren benachbarten bzw. zueinander gewandten Seiten bilden, zwingend eine oder zwei Sensorspulen angeordnet sind. Dabei sind sie einigermaßen mittig zwischen den Induktionsheizspulen angeordnet und überlappen dabei diese beiden benachbarten Induktionsheizspulen.

Aus der EP 3 490 339 A1 ist ein Induktionskochfeld mit mehreren Induktionsheizspulen und einer Vielzahl von Topferkennungssensoren bekannt. Die Topferkennungssensoren sind sehr lange und sehr schmal ausgebildet. Sie sind jeweils in Zwischenräumen zwischen Induktionsheizspulen angeordnet. Dabei sind sämtliche Zwischenräume zwischen benachbarten Induktionsheizspulen mit Topferkennungssensoren versehen.

Aus der EP 2 312 908 A1 ist ein weiteres Kochfeld mit vier Heizeinrichtungen bekannt. Über den Heizeinrichtungen verläuft ein flächiger Träger mit einer Vielzahl von in einem regelmäßigen, engen Muster angeordneten Topferkennungssensoren. Alternativ zu einer gleichmäßigen Anordnung der Topferkennungssensoren in einem regelmäßigen Muster kann vorgesehen sein, dass über einem Mittelpunkt einer jeden Heizeinrichtung kein Topferkennungssensor angeordnet ist. Dabei sind mehrere Topferkennungssensoren auch an Positionen angeordnet, an denen sie keine Heizeinrichtung überlappen, teilweise noch nicht einmal annähernd in deren Nähe sind.

Aus der EP 2 194 754 A1 ist ein Kochfeld mit Topferkennungssensoren bekannt, wobei die Topferkennungssensoren ebenfalls rechteckig und länglich ausgebildet sind. Dabei wirkt jeweils ein Paar von solchen Topferkennungssensoren zusammen. Es ist jeweils vorgesehen, dass ein Teil dieser Topferkennungssensoren oberhalb einer Heizeinrichtung angeordnet sind und ein anderer Teil außerhalb davon und daneben angeordnet sind. Dabei weisen die daneben angeordneten Topferkennungssensoren deutlichen Abstand zu der Heizeinrichtung auf und überlappen somit keine Heizeinrichtung und verlaufen nicht darüber.

Aus der DE 10 2006 043 182 A1 ist ein Induktionskochfeld bekannt mit vier Induktionsheizeinrichtungen. Oberhalb der Induktionsheizeinrichtungen sind jeweils zwei Sekundärspulen als Sensorspulen angeordnet, die antiparallel geschaltet sind und mittels des von ihnen erzeugten Magnetfelds ein darüber aufgestelltes Kochgefäß erkennen können. In einer Ausgestaltung können sogar vier Sensorspulen angeordnet sein, wodurch vor allem besonders gut erkannt werden kann, ob ein Topf zentrisch über ihnen und über der Induktionsheizeinrichtung aufgesetzt ist.

Aus der EP 3 021 639 A1 ist ein nochmals weiteres Induktionskochfeld mit Induktionsheizspulen bekannt. Es ist eine Erkennungseinrichtung vorgesehen, um das Abstellen eines Topfes über den Induktionsheizspulen erkennen zu können. Diese Erkennungseinrichtung ist nicht näher beschrieben, sie wird lediglich definiert durch die Beschreibung ihrer Funktion. Sie soll insbesondere eine Mehrfachüberdeckung einer Induktionsheizeinrichtung mit zwei Töpfen erkennen können.

Aus der US 2015 034 630 A1 ist ein weiteres Induktionskochfeld mit Induktionsheizspulen bekannt, bei dem über manchen Induktionsheizspulen in nicht genau erkennbarer Position Temperatursensoren angeordnet sind. Jeweils ein Temperatursensor ist über jeweils einer der Induktionsheizspulen angeordnet, wobei ein dritter Temperatursensor in einem Zwischenraum zwischen den Induktionsheizspulen angeordnet ist. Darunter und somit zwischen den beiden Induktionsheizspulen, und zwar mit jeweiligem Abstand, befindet sich ein induktiver Topferkennungssensor, mit dem ein darüber aufgesetzter Topf sowie ggf. dessen Temperatur erkannt werden kann.

### AUFGABE UND LÖSUNG

Der Erfindung liegt die Aufgabe zugrunde, ein eingangs genanntes Induktionskochfeld zu schaffen, mit dem Probleme des Standes der Technik gelöst werden können und es insbesondere möglich ist, mit nicht zu großem Aufwand einen Aufsetzort eines Topfes auf dem Induktionskochfeld zu erkennen und zur Steuerung des Induktionskochfelds bzw. der Induktionsheizspulen zu verwenden.

Gelöst wird diese Aufgabe durch ein Induktionskochfeld mit den Merkmalen des Anspruchs 1. Vorteilhafte sowie bevorzugte Ausgestaltungen der Erfindung sind Gegenstand der weiteren Ansprüche und werden im Folgenden näher erläutert. Dabei werden manche der Merkmale nur für das Induktionskochfeld oder nur für das Verfahren zu seiner Steuerung beschrieben. Der Wortlaut der Ansprüche wird durch ausdrückliche Bezugnahme zum Inhalt der Beschreibung gemacht.

Es ist vorgesehen, dass das Induktionskochfeld eine Kochfeldplatte und mehrere unter der Kochfeldplatte angeordnete Induktionsheizspulen aufweist. Des Weiteren weist es mehrere unter der Kochfeldplatte angeordnete Sensorspulen auf, die vorteilhaft oberhalb der Induktionsheizspulen angeordnet sind. Die Induktionsheizspulen und die Sensorspulen sind jeweils flach ausgebildet und verlaufen in Ebenen, die parallel zueinander sind. Die Ebenen sind außerdem parallel zu der Kochfeldplatte, wodurch ein möglichst flacher Aufbau des gesamten Induktionskochfelds möglich wird. Zwei benachbarte Induktionsheizspulen bilden mit ihren benachbarten Seiten bzw. mit ihren zueinander hingewandten Seiten einen sogenannten Nachbarbereich miteinander. Dieser Nachbarbereich ist vorteilhaft streifenförmig, wenn die Induktionsheizspulen rechteckig bzw. mehreckig ausgebildet sind und nicht kreisrund. Jedenfalls liegt jeder Nachbarbereich zwischen zwei benachbarten Induktionsheizspulen.

Erfindungsgemäß ist vorgesehen, dass keine Sensorspule in einem Nachbarbereich oder allgemein über zwei Induktionsheizspulen überlappt. Somit verläuft jede Sensorspule nur oberhalb einer einzigen Induktionsheizspule, weist also zu einer dazu benachbarten Induktionsheizspule einen gewissen Abstand auf. Ein solcher Abstand zu einer benachbarten Induktionsheizspule kann vorteilhaft mehr als 0,3 cm betragen, besonders vorteilhaft mehr als 0,8 cm oder sogar mehr als 1,2 cm. Diese Bedingung gilt erfindungsgemäß dann, wenn die beiden benachbarten Induktionsheizspulen mit dem Nachbarbereich zwischen sich, über dem eine Sensorspule verläuft, nicht-gleichphasig betrieben werden.

Gleichphasig ist hier im Rahmen dieser Anmeldung darauf bezogen, ob die Induktionsheizspulen an derselben Phase bzw. Netzphase oder am selben Leiter eines Drei-Leiter-Anschlusses betrieben werden, also eines Drehstromnetzes, was als gleichphasig bezeichnet wird. Als gegenphasig bezeichnet wird ein Betrieb der beiden Induktionsheizspulen an zwei verschiedenen vorgenannten Phasen bzw. Netzphasen. Dies kann insbesondere darauf bezogen sein, dass jede Induktionsheizspule einzeln mittels eigenem Wechselrichter, gemeinsamer Gleichstromschiene und Umrichter sowie Netzfilter an eine solche Netzphase bzw. an einen solchen Leiter angeschlossen ist. Gleichphasig betriebene Induktionsheizspulen sind mit ihrem jeweils eigenen Wechselrichter an die gemeinsame Gleichstromschiene angeschlossen, die wiederum über einen Umrichter sowie ein Netzfilter aus einer solchen Netzphase gespeist ist. Gegenphasig betriebene Induktionsheizspulen sind mit ihrem jeweils eigenen Wechselrichter an unterschiedliche Gleichstromschienen angeschlossen, die aus unterschiedlichen Phasen des Netzes gespeist sind.

Mit einer vorgenannten Ausnahme von gleichphasig betriebenen Induktionsheizspulen, über die eine Sensorspule überlappend angeordnet sein kann, sollten also durch die vorgenannte Abstandsbedingung Störungen an der Sensorspule vermieden werden. Bei gleichphasig bzw. an der gleichen Netzphase betriebenen Induktionsheizspulen bilden deren jeweilige Magnetfelder keine Störungen für die Sensorspule, welche deren Messung negativ beeinträchtigen könnten. Sind benachbarte Induktionsheizspulen jedoch nicht gleichphasig betrieben, so darf erfindungsgemäß eben keine Sensorspule über diese beiden Induktionsheizspulen überlappen.

Mit der Erfindung ist somit eine verbesserte Topferkennung möglich, ohne dass beispielsweise die Induktionsheizspulen während eines Messvorgangs an den Sensorspulen ihren Heizbetrieb unterbrechen müssen. Selbst wenn diese Unterbrechung nur eine kurze Zeit wie beispielsweise weniger als 1 Sekunde dauert, vorteilhaft weniger als 0,1 Sekunde, so stört diese deren Heizbetrieb und kann Geräusche sowie ungewünschte Netzrückkopplungen oder Störungen innerhalb einer Leistungselektronik des Induktionskochfelds verursachen.

Es kann vorgesehen sein, dass die Induktionsheizspulen rechteckig oder angenähert rechteckig ausgebildet sind. Vorteilhaft sind sie geringfügig länglich, wobei sie besonders vorteilhaft 10% bis maximal 50% länger sind als breit. Die angenäherte Rechteckform kommt daher, dass die Spulenwindungen nicht bis ganz in die Ecken hinein verlaufen können bzw. nicht abgeknickt werden sollen. Ein Radius an den Ecken kann demzufolge zwischen 1 cm und 3 cm betragen, unter Umständen sogar 5 cm. Dennoch ist die Form im Wesentlichen rechteckig bzw. wird entsprechend angesehen. Eine grundsätzlich ähnliche rechteckige Induktionsheizspule ist aus der DE 20 2006 016 551 U1 bekannt.

In Ausgestaltung der Erfindung können die Induktionsheizspulen unterschiedlich ausgebildet sein, insbesondere unterschiedlich groß. In einer anderen vorteilhaften Ausgestaltung sind sämtliche Induktionsheizspulen gleich groß und/oder sogar identisch ausgebildet. Dies vereinfacht und verbilligt die Herstellung. Des Weiteren kann dann ein flächiges Induktionskochfeld leicht mit einer Anzahl von Induktionsheizspulen bestückt werden. Besonders vorteilhaft weisen sämtliche Induktionsheizspulen eines Induktionskochfelds dieselbe Wicklungsrichtung ihrer Windungen auf. Damit ist auch im Prinzip ihre Montageausrichtung jeweils dieselbe. Durch den gewissen Abstand benachbarter Induktionsheizspulen zueinander sowie durch die vorteilhafte Verwendung von üblichen Ferritkernen an den Induktionsheizspulen können negative Effekte gegenseitiger Beeinflussung vermieden werden.

Besonders vorteilhaft sind mindestens zwei Induktionsheizspulen hintereinander angeordnet und mindestens drei Induktionsheizspulen sind nebeneinander angeordnet. Dies bedeutet also, dass mindestens sechs Induktionsheizspulen am Induktionskochfeld vorgesehen sein können, vorteilhaft acht bis zwölf.

Des Weiteren bilden erfindungsgemäß zwei benachbarte Induktionsheizspulen einen Nachbarbereich miteinander, wobei diese beiden Induktionsheizspulen dann mit ihren benachbarten Seiten in diesem Nachbarbereich liegen bzw. ihn begrenzen. Vorteilhaft weisen zwei benachbarte Induktionsheizspulen einen gewissen Abstand zueinander auf, also einen Abstand ihrer äußersten bzw. ihrer die Seiten definierenden Windungen. Dieser Abstand zueinander kann zwischen 1 cm und 3 cm betragen.

Ein Abstand zwischen zwei benachbarten Induktionsheizspulen bzw. deren äußersten Windungen kann jedoch auch kleiner als 1 cm gewählt werden, beispielsweise sogar kleiner als 5 mm oder kleiner als 3 mm. Dies ist ein sehr geringer Abstand, der gleichzeitig eine sehr gute und möglichst vollständige Bedeckung der Fläche des Induktionskochfelds mit Induktionsheizspulen ermöglicht. Eine über einer der Induktionsheizspulen angeordnete Sensorspule ist vorteilhaft vollständig oberhalb dieser Induktionsheizspule angeordnet. Sie sollte, insbesondere mit ihrer eigenen äußersten Windung, von einer äußersten Windung oder einem Außenrand der Induktionsheizspule um mindestens 0,2 cm nach innen versetzt sein, damit ein Abstand zur hier benachbarten Induktionsheizspule ausreichend groß ist. Vorteilhaft ist sie um mindestens 0,4 cm oder um mindestens 1 cm nach innen versetzt, damit sie auch tatsächlich nicht gestört wird.

In vorteilhafter Ausgestaltung der Erfindung sind sämtliche Sensorspulen des Induktionskochfelds in einem regelmäßigen Muster angeordnet, vorteilhaft in einer Richtung, besonders vorteilhaft in zwei oder alle Richtungen regelmäßig. Dies gilt vor allem dann, wenn auch die Induktionsheizspulen identisch ausgebildet und identisch bzw. in einem regelmäßigen Muster angeordnet sind, vorzugsweise auch hinsichtlich einer Wicklungsrichtung. Es kann dabei vorgesehen sein, dass immer zwei, drei oder vier Sensorspulen über einer Induktionsheizspule angeordnet sind. Somit ist eine ausreichend gute Auflösung zur Erkennung eines aufgesetzten Topfs sowie dessen Größe und Position möglich.

In einer Ausgestaltung der Erfindung kann vorgesehen sein, dass jeder Mittelpunkt aller Induktionsheizspulen frei ist und nicht von einer Sensorspule überdeckt ist. Hier kann in Erweiterung der Erfindung vorgesehen sein, dass um diesen Mittelpunkt herum ein gewisser Bereich frei ist ohne Überdeckung durch eine Sensorspule. Dieser freie Bereich kann kreisförmig sein und einen Durchmesser von 0,5 cm bis 2 cm oder sogar bis 4 cm aufweisen. Über einem Mittelpunkt einer Induktionsheizspule muss deswegen nicht zwingend eine Sensorspule angeordnet sein, weil ein in diesem Bereich aufgesetzter Topf in jedem Fall auch sehr gut durch die Induktionsheizspule als induktiver Sensor selbst erkannt werden kann.

In vorteilhafter Ausgestaltung können sämtliche Sensorspulen gleich groß ausgebildet sein, insbesondere sind sie identisch ausgebildet. Dabei kann auch ihre Wicklungsrichtung jeweils immer die gleiche sein. So ist eine leichte Montage eines Induktionskochfelds möglich mit einer einzigen Ausgestaltung von Sensorspulen.

In vorteilhafter Ausgestaltung der Erfindung kann vorgesehen sein, dass alle Sensorspulen innerhalb der Flächen der Induktionsheizspulen angeordnet sind bzw. nicht seitlich über die Flächen der Induktionsheizspulen überstehen. Durch derart ausschließlich innerhalb der Flächen der Induktionsheizspulen angeordnete Sensorspulen kann deren nachteilige Beeinträchtigung durch zwei benachbarte, nicht-gleichphasig betriebene Induktionsheizspulen ausgeschlossen werden.

Für eine vorteilhafte konstruktive Ausgestaltung des Induktionskochfelds kann vorgesehen sein, dass mehrere Sensorspulen auf einem gemeinsamen Träger angeordnet sind. So können beispielsweise pro Induktionsheizspule oder pro Paar von benachbarten Induktionsheizspulen alle Sensorspulen auf einem solchen gemeinsamen Träger angeordnet sein. Dies erleichtert eine zügige und exakte Montage des Induktionskochfelds. Ein solcher Träger kann beispielsweise eine flächige Trägerplatte oder Trägerfolie sein. Der Träger kann auf die Induktionsheizspulen aufgelegt sein, eine Befestigung kann auch mittels eines elektrischen Steckkontakts erfolgen.

In vorteilhafter Ausgestaltung der Erfindung ist vorgesehen, dass die Sensorspulen runde Form aufweisen, insbesondere kreisrunde Form. Dies rührt vor allem daher, dass ihrer geometrischen Form, anders als bei den Induktionsheizspulen, keine wesentliche Bedeutung zukommt und diese runde Form eine einfache Herstellung ermöglicht sowie damit eine gewisse Fläche überdeckt wird. Eine Sensorspule kann beispielsweise 10 bis 80 Windungen aufweisen, vorzugsweise zwischen 30 und 60. Ihr Durchmesser kann zwischen 2 cm und 5 cm liegen, vorzugsweise zwischen 3 cm und 4 cm.

In weiterer Ausgestaltung der Erfindung können eine Sensorspule oder alle Sensorspulen einen Temperatursensor aufweisen oder tragen, beispielsweise in ihrem Mittenbereich bzw. auf einem Mittelpunkt, insbesondere oben. Sensorspule und Temperatursensor können eine Baueinheit bilden, vorteilhaft auch mit einem einzigen elektrischen Anschluss, so dass sie leicht verbaut und angeschlossen werden können. Der Temperatursensor ist besonders vorteilhaft ein temperaturabhängiger Widerstand, beispielsweise ein NTC oder ein PT1000. Der Temperatursensor kann verwendet werden zusammen mit der Sensorspule, um das Aufstellen eines Topfes darüber sicher zu erkennen, beispielsweise wenn trotz Heizbetriebs der Induktionsheizspule keine Temperaturerhöhung erfolgt. Zusätzlich oder alternativ kann er für normale Funktionen eines Temperatursensors wie beispielsweise eine Heißanzeige verwendet werden.

In vorteilhafter Ausgestaltung der Erfindung können die Induktionsheizspulen eine einzige Lage von Windungen aufweisen bzw. ihre Windungen können in einer einzigen Lage und somit einer einzigen Ebene verlaufen. Vorzugsweise verlaufen alle Induktionsheizspulen in derselben Ebene. Dies ist vorteilhaft parallel zur Kochfeldplatte und auch parallel zu einer Ebene, in der die Sensorspulen verlaufen. In ähnlicher Form können auch, grundsätzlich jedoch unabhängig davon, in einer Alternative die Sensorspulen einlagig gewickelt sein bzw. ihre Windungen können in einer einzige Lage bzw. einer einzigen und vorteilhaft gemeinsamen Ebene verlaufen. Bevorzugt sind die Sensorspulen in einer anderen Alternative zweilagig bzw. doppellagig ausgebildet, weisen also zwei Lagen von Windungen aufeinander bzw. übereinander auf. So kann eine ausreichende Windungszahl erreicht werden bei nicht zu großem Durchmesser, damit sie ggf. leichter in ausreichendem Abstand von benachbarten Induktionsheizspulen angeordnet werden können. Dies kann im Rahmen der Erfindung aber noch als eine Ebene der Sensorspule angesehen werden. Vorzugsweise verlaufen alle Sensorspulen in derselben Ebene. Bevorzugt verläuft die Ebene der Sensorspulen nicht in der Ebene der Induktionsheizspulen, besonders bevorzugt oberhalb davon.

Auch die Sensorspulen können vorteilhaft identisch zueinander ausgebildet sein zur Reduzierung von Bauteilaufwand. In einer anderen Alternative haben bei einer Sensorspule alle Windungen den etwa gleichen Durchmesser mit Abweichungen von dem 1-fachen bis 5-fachen einer Drahtdicke. In diesem Fall bilden die Windungen quasi ein Bündel mit möglichst geringer Ausdehnung in vertikaler Richtung und auch im Durchmesser der Sensorspule. Nachteilig wäre die geometrische Ausdehnung des Bündels, vorteilhaft wäre die höhere Induktivität bei kleinerer Windungszahl.

Bei einem eingangs genannten Verfahren zur Steuerung eines vorgenannten Induktionskochfelds ist vorgesehen, dass die Sensorspulen stets betrieben werden bzw. erfassen sollen, ob über ihnen ein Topf auf die Kochfeldplatte aufgestellt ist. Dieser stete Betrieb soll hier bedeuten, dass die Sensorspulen nicht jede Sekunde bzw. permanent betrieben werden, sondern beispielsweise im Intervallbetrieb bzw. alle paar Sekunden, beispielsweise alle 0,5 Sekunden bis 30 Sekunden. Der Betrieb einer Induktionsheizspule zum Beheizen eines aufgestellten Topfes soll jedoch nicht bedeuten, dass dann die Sensorspulen nicht mehr arbeiten müssen. Es kann vorgesehen sein, dass der Einfachheit halber, vorteilhaft in einem Intervallbetrieb, sämtliche Sensorspulen stetig betrieben werden, also beispielsweise alle vorgenannten 0,5 Sekunden bis 30 Sekunden erfassen oder versuchen zu erfassen, ob über ihnen ein Topf aufgestellt ist. Falls dann eine Sensorspule von einer direkt darunter oder benachbart darunter betriebenen Induktionsheizspule in ihrer Funktion beeinträchtigt wird, stört dies nicht, da dann von einem aufgesetzten Topf bzw. ausreichend auf die Induktionsheizspule aufgesetzten Topf ausgegangen werden kann. Ansonsten würde die Induktionsheizspule aufgrund ihrer eigenen Betriebsbedingungen, insbesondere bei nicht ausreichend aufgesetztem Topf oder nicht ausreichender Überdeckung, den Heizbetrieb einstellen.

Vorteilhaft liegt die Resonanzfrequenz der Sensorspulen und ihrer Auswerteschaltung deutlich über der Arbeitsfrequenz der Induktionsspulen, vorzugsweise 5 mal bis 30 mal höher. So können sie jeweils besser arbeiten und stören sich nicht. Besonders vorteilhaft wird eine Induktionsspule nur in Betrieb gesetzt zum Beheizen eines Topfes, sofern mindestens eine der Sensorspulen von einem Topf bedeckt ist. Dann ist die Anwesenheit eines Topfes sichergestellt.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine Draufsicht auf ein Induktionskochfeld gemäß der Erfindung in einfacher Ausgestaltung,
- Fig. 2: eine Anordnung von Induktionsheizspulen ähnlich derjenigen aus Fig. 1 mit Abstand zwischen benachbarten Induktionsheizspulen,
- Fig. 3: eine Draufsicht auf ein detailliert dargestelltes Induktionskochfeld gemäß der Erfindung mit einer weiteren Variante einer Anordnung von Sensorspulen und drei aufgestellten Töpfen,
- Fig. 4: eine Vergrößerung eines Ausschnitts des Induktionskochfelds aus Fig. 3 mit Sensorspulen, die einen Nachbarbereich zwischen zwei benachbarten Induktionsheizspulen geringfügig überlappen, und
- Fig. 5: eine weitere Vergrößerung eines Ausschnitts des Induktionskochfelds aus Fig. 3 mit einer alternativen Anordnung von Sensorspulen, die einen Nachbarbereich stark oder sogar vollständig überlappen.

### Detaillierte Beschreibung der Ausführungsbeispiele

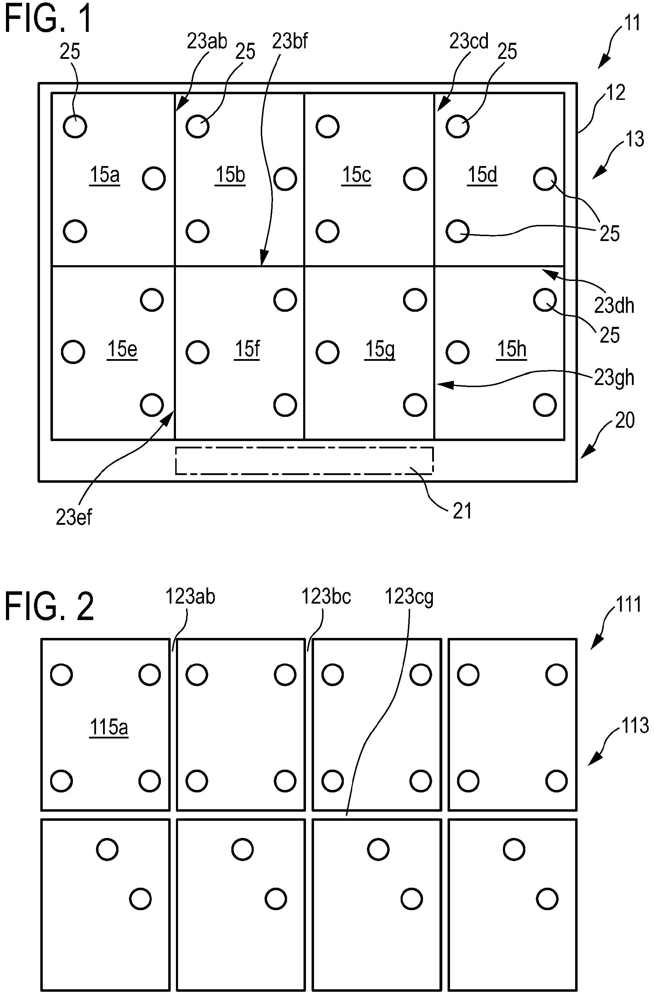

In der Fig. 1 ist ein erfindungsgemäßes Induktionskochfeld 11 in der Draufsicht gezeigt in sehr einfacher Ausgestaltung. Das Induktionskochfeld 11 weist eine Kochfeldplatte 12 auf, deren hinterer großer Teil einen Heizbereich 13 bildet. In diesem Heizbereich sind acht rechteckige Induktionsheizspulen 15a bis 15h angeordnet, die identisch ausgebildet sind. Sie grenzen direkt aneinander an für die Einfachheit der Darstellung. Dies muss aber nicht so sein, sie können einen Abstand von 0,5 cm bis 2 cm aufweisen. Dies kann vorteilhaft für ihre jeweils äußerste Windung gelten, alternativ für ihre Außenkanten, beispielsweise eines Trägers. Dies wird nachfolgend noch näher erläutert.

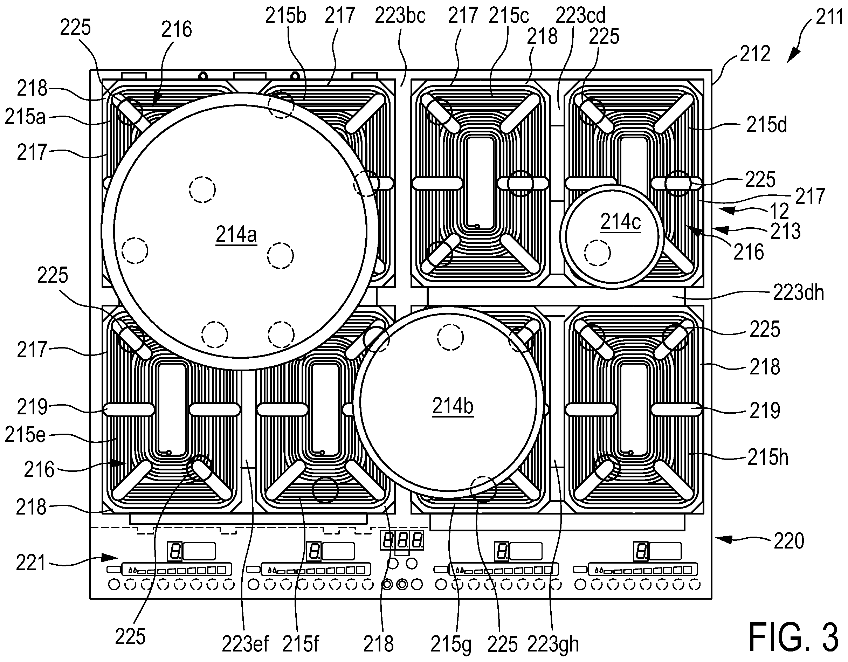

Ein vorderer Bereich des Induktionskochfelds 11 bildet einen Bedienbereich 20. Hier kann eine längliche breite Bedieneinrichtung 21 angeordnet sein, die strichpunktiert dargestellt ist. Für konkrete Ausgestaltungen wird auf den Stand der Technik sowie vor allem auf die Fig. 3 verwiesen.

Oberhalb der Induktionsheizspulen 15a bis 15h sind runde Sensorspulen 25 angeordnet. Hier ist eine über das gesamte Induktionskochfeld 11 hinweg regelmäßige Anordnung dieser Sensorspulen 25 vorgesehen, wobei über jeder einzelnen Induktionsheizspule 15 drei solcher Sensorspulen 25 vorgesehen sind. Die Sensorspulen 25 sind jeweils vollständig innerhalb der Fläche der jeweiligen Induktionsheizspule 15 angeordnet und weisen zu deren Randbereich einen Abstand auf, der beispielsweise 2 cm bis 3 cm betragen kann. Selbst wenn die Induktionsheizspulen 15 mit ihren hier nicht dargestellten äußersten Windungen nicht bis an die Trennlinien reichen sollten und somit die zwischen benachbarten Induktionsheizspulen 15 gebildeten Nachbarbereiche 23 etwas breiter sind, beispielsweise ebenfalls 1 cm bis 2 cm, so befinden sich diese Sensorspulen 15 noch innerhalb der von den äußersten Windungen jeder Induktionsheizspule 15 gebildeten Fläche. Sämtliche Induktionsheizspulen 15 und Sensorspulen 25 sind hier identisch ausgebildet.

Innerhalb der oberen Reihe von Induktionsheizspulen 15a bis 15d sind links zwei Sensorspulen 25 übereinander mit einem Abstand von etwa 2 cm bis 3 cm zum linken Rand der Induktionsheizspulen 15 angeordnet. Mit demselben Abstand zum rechten Rand jeder Induktionsheizspule 15 ist, sozusagen auf halber Höhe bzw. mittig zu den beiden linken Sensorspulen 25, eine einzelne Sensorspule 25 angeordnet.

Der Abstand der Sensorspulen 25 innerhalb der horizontalen Reihen ist jeweils genau gleich. Da in der unteren Reihe von Induktionsheizspulen 15e bis 15h die Anordnung sozusagen spiegelverkehrt ist, also zum linken Rand hin eine einzige mittige Sensorspule 25 und zum rechten Rand zwei übereinander angeordnete Sensorspulen 25 vorgesehen sind, ist insgesamt ein regelmäßiges Muster auch der Sensorspulen 25 gegeben. Somit sind auch die Abstände der Sensorspulen 25 in vertikaler Richtung alle genau gleich. Insgesamt sind 24 Sensorspulen 25 vorgesehen. Bezüglich ihrer Ansteuerung und Auswertung wird auf den genannten Stand der Technik verwiesen.

In der Darstellung eines Induktionskochfelds 111 in Fig. 2, von dem nur die Induktionsheizspulen 115a bis 115h gezeigt sind, sind die Nachbarbereiche 123 zwischen benachbarten Induktionsheizspulen etwas breiter ausgebildet. Somit könnten nun die äußeren Umrandungen der einzelnen Induktionsheizspulen 115 sozusagen deren geometrischen oder konstruktiven äußeren Rand, auch mit einem Träger, darstellen. Alternativ könnten es auch die jeweils äußersten Windungen von Windungen der Induktionsheizspulen 115 sein.

Auch hier ist zu erkennen, dass sämtliche Sensorspulen 125 vollständig innerhalb der Fläche der jeweiligen Induktionsheizspule 115 angeordnet sind bzw. verlaufen. Bei der oberen horizontalen Reihe von Induktionsheizspulen 115a bis 115d sind es jeweils vier Sensorspulen 125 über jeder Induktionsheizspule 115. Diese sind nach jeweils genau demselben Muster angeordnet, allerdings derart weit in die Ecken der jeweiligen Induktionsheizspule 115 verschoben, dass innerhalb der so gebildeten Reihen keine Gleichverteilung bzw. keine gleichen Abstände vorgesehen sind.

In der unteren Reihe von Induktionsheizspulen 115e bis 115h sind als alternative Ausgestaltung jeweils nur zwei Sensorspulen 125 angeordnet. Ein gesamtes Induktionskochfeld 111 sollte entweder die hintere Anordnung oder die vordere Anordnung von Sensorspulen 125 über allen Induktionsheizspulen 115 aufweisen.

Die beiden Sensorspulen 125 in der unteren Reihe von Induktionsheizspulen 115e bis 115h sind so angeordnet, dass eine davon nahe der oberen Begrenzung der Induktionsheizspule 115 angeordnet ist und in Bezug auf diese kurze Außenseite der Induktionsheizspule in etwa mittig angeordnet ist. Die zweite Sensorspule 125 ist nahe dem rechten Außenrand angeordnet und mit Bezug auf die Länge dieser Seite der Induktionsheizspule 115 in etwa in der Mitte. So bleibt zwar über jeder Induktionsheizspule 115e bis 115h der untere linke Bereich weitgehend ohne entsprechende Sensorspule 125. Das Aufsetzen eines Topfs in diesem Bereich kann aber auch dadurch erkannt werden, dass die Induktionsheizspule 115 selbst einen Topf über sich erkennt. Dessen Größe und Position kann auch in Zusammenwirkung mit der rechten Sensorspule der Induktionsheizspule 115 links daneben erfolgen. Somit können unter Umständen auch nur zwei Sensorspulen pro Induktionsheizspule 115 ausreichend sein. Innerhalb dieser unteren Reihe von Induktionsheizspulen 115e bis 115h ist die Anordnung der Sensorspulen 125 dann jeweils wieder gleichmäßig.

In der Fig. 3 ist detaillierter dargestellt, wie ein Kochfeld 211 mit Kochfeldplatte 212 im Heizbereich 213 ausgebildet sein kann. Der davor liegende Bedienbereich 220 mit Bedieneinrichtung 221 ist ausgebildet wie aus der EP 3026981 A1 bekannt. Es sind acht Induktionsheizspulen 215a bis 215h vorgesehen. Diese sind angenähert rechteckig mit abgerundeten Ecken. Jede Induktionsheizspule 215 weist eine Vielzahl von Windungen 216 auf, wobei hiervon die äußerste Windung 217 relevant ist. Jede der Induktionsheizspulen 215 ist auf einem Träger 218 angeordnet, der grundsätzlich rechteckige Form aufweist und an den Ecken sozusagen abgeschnitten ist, so dass sich quasi ein Achteck ergibt. Der Außenrand des Trägers 218 überragt die äußerste Windung 217 jeweils etwas, beispielsweise um etwa 1 cm.

Oben auf den Induktionsheizspulen 215 sind stabförmige flache Abstandshalter 219 vorgesehen. Sie können aus Kunststoff bestehen, vorzugsweise aus Silikon, und beispielsweise aufgeklebt sein. Sie dienen dazu, aufgelegte Funktionseinheiten wie beispielsweise nicht dargestellte Träger für Sensorspulen 225 über sich zu haltern mit einem gewissen Abstand. Dies ist aus dem Stand der Technik aber auch bekannt.

Zwischen den Induktionsheizspulen 215 sind jeweils Nachbarbereiche 223 gebildet, ihre Breite beträgt mit Bezug auf den Abstand von jeweils benachbarten Außenkanten der Träger 218 etwa 1 cm bis 2 cm. Dies bedeutet, dass benachbarte äußerste Windungen 217 einen Abstand von maximal 4 cm bis 5 cm zueinander aufweisen können, vorteilhaft von 1 cm bis 3 cm. Diese Abstände können natürlich auch geringer sein für eine dichtere Anordnung der Induktionsheizspulen 215, alternativ für deren etwas größere Ausgestaltung. Ein Mindestabstand von wenigen Millimetern wird zwischen den Außenkanten der Träger 218 als vorteilhaft angesehen, damit sich diese nicht berühren und problemlos auf im Kochfeld 211 montiert werden können. In einer vorteilhaften Ausführung der Erfindung können die Außenkanten der Träger 218 einen Abstand zueinander von 1,2 cm in seitlicher Richtung und 1,6 cm in Richtung vorne/hinten aufweisen. Die Abstände der benachbarten äußersten Windungen 217 können dann jeweils etwa 0,4 cm größer sein.

Nachbarbereiche 223 sind auch zwischen Induktionsheizspulen 215 vorgesehen, die mit ihren kurzen Seiten benachbart zueinander verlaufen. Diese Nachbarbereiche 223 und die entsprechenden Abstände liegen vorteilhaft mit ihren Abmessungen im vorgenannten Bereich.

Entsprechend der Verteilung von Sensorspulen nach Fig. 1 sind die Sensorspulen 225 oberhalb der Induktionsheizspulen 215 verteilt angeordnet, hier auf Trägern, die der Übersichtlichkeit halber nicht dargestellt sind. Diese Träger sind vorteilhaft flächig ausgebildet und bestehen aus einem elektrisch isolierenden Material, das die Magnetfelder der Induktionsheizspulen 215 nicht beeinträchtigt und davon auch nicht beeinträchtigt wird. Solches Material kann beispielsweise Folie wie Kapton odgl. sein, alternativ dünne Trägerscheiben aus Mikanit odgl.. Über jeder Induktionsheizspule 215 sind drei Sensorspulen 225 vorgesehen. Die Erwägungen zu ihrer Verteilung sind vorstehend dargelegt worden und gelten auch hier. Die Sensorspulen 225 über den Induktionsheizspulen 215a bis 215d sind in horizontalen Reihen angeordnet, und innerhalb dieser Reihen weisen sie jeweils gleichen Abstand auf. Es ist also eine regelmäßige Anordnung für die hinteren vier Induktionsheizspulen 215a bis 215d.

Über den vorderen vier Induktionsheizspulen 215e bis 215h sind zwar auch jeweils drei Sensorspulen 225 vorgesehen. Diese sind aber unterschiedlich verteilt. Während zur hinteren kürzeren Seite hin jeweils zwei Sensorspulen 225 auf gleiche Art und Weise nebeneinander angeordnet sind und alle insgesamt eine Reihe bilden, ist jeweils im vorderen Bereich nur eine einzige Sensorspule 225 vorgesehen. Bei der Induktionsheizspule 215e ist diese Sensorspule 225 aus der Mitte heraus nach rechts verschoben, und bei der Induktionsheizspule 215h ist sie aus der Mitte heraus nach links verschoben. Bei den dazwischenliegenden Induktionsheizspulen 215f und 215g sind die Sensorspulen 225 auf die vordere kurze Seite der Induktionsheizspulen 215 bezogen genau in der Mitte angeordnet. Durch diese spezielle Anordnung kann versucht werden, in Erwartung dessen, wie eine Bedienperson wahrscheinlich einen Topf aufsetzt, auch eine passende Anordnung der Sensorspulen 225 vorzunehmen. Auch bei den vier vorne angeordneten Induktionsheizspulen 215e bis 215h weisen die Sensorspulen 225 jeweils einen vorgenannten Abstand nach innen zur jeweils äußersten Windung 217 auf. Somit liegt zur äußersten Windung 217 der jeweils benachbarten Induktionsheizspule 215 ein großer Abstand von mindestens 3 cm oder 5 cm vor oder noch mehr. Er kann aber auch geringer sein, wie im Folgenden noch ausgeführt wird.

Aufgrund der Position von drei verschiedenen Töpfen 214a, 214b und 214c samt jeweiliger Überdeckung der deswegen strichliert dargestellten Sensorspulen 225 oder eben der nicht überdeckten Sensorspulen 225 kann das Kochfeld 211 bzw. eine nicht dargestellte Steuerung in der Bedieneinrichtung 221 Größe und Position der einzelnen Töpfe 214 bestimmen. Für den Topf 214c ist dies offensichtlich gut möglich. Die überdeckte Induktionsheizspule 215d registriert mindestens einen darüber aufgestellten Topf, was sich mit einem Signal der voll überdeckten Sensorspule 225 links unten deckt. Die benachbarten Sensorspulen 225 sind alle nicht bedeckt, ebenso nicht die Induktionsheizspule 215c und die Induktionsheizspule 215h. Somit können Größe und Position des Topfes 214c sehr gut bestimmt werden.

Für den Topf 214b kann die Steuerung erkennen, dass die linke obere Sensorspule 225 über der Induktionsheizspule 215g voll bedeckt ist, die Sensorspule 225 rechts daneben und die darunter dagegen nur teilweise. Die Induktionsheizspule 215f kann ebenfalls eine gewisse Überdeckung erkennen, die allerdings auch noch vom Topf 214a kommt. Die Unterscheidung zwischen den Töpfen 214a und 214b kann aber nicht direkt von der Induktionsheizspule 215f selbst vorgenommen werden. Ihre Sensorspule 225 rechts oben ist nämlich gerade nicht überdeckt, ebenso nicht die untere Sensorspule 225. Somit kann der Topf 214b nicht viel größer sein als er hier tatsächlich ist, gleichzeitig auch nicht viel kleiner, da ansonsten die Sensorspule 225 links oben oder unten über der Induktionsheizspule 215g anders bzw. überhaupt nicht mehr bedeckt wären.

Für den Topf 214a wird nach ähnlichen Erwägungen vorgegangen. Durch die Teilbedeckung der Sensorspulen 225 links oben an der Induktionsheizspule 215a und links oben sowie rechts mittig an der Induktionsheizspule 215b kann in etwa ein Randverlauf erkannt werden. Durch die Teilüberdeckung der Sensorspule 225 links oben und die Vollbedeckung der Sensorspule 225 rechts oben über der Induktionsheizspule 215e kann Position und Größe des Topfs 214a eigentlich schon ausreichend gut bestimmt werden. Nimmt man die Information von den beiden oberen Sensorspulen 225 über der Induktionsheizspule 215f hinzu, nämlich Vollüberdeckung links oben und keine Überdeckung rechts oben, so kann der Topf 214a korrekt bestimmt werden. Gerade dadurch, dass zwischen den Töpfen 214a und 214b eine Sensorspule 225 rechts oben über der Induktionsheizspule 215f freiliegt, kann bestimmt werden, dass die absolute Gesamtbedeckung der Induktionsheizspule 215f von zwei unterschiedlichen Töpfen kommen muss.

Durch den Abstand der Sensorspulen 225 zu der äußersten Windung 217 der jeweils benachbarten Induktionsheizspule kann, unabhängig davon, ob die benachbarten Induktionsheizspulen 215 gleichphasig oder gegenphasig betrieben werden, eine sehr gute Erkennungssicherheit erreicht werden. Vor allem kann ein Messen mittels der Sensorspulen 225 permanent erfolgen, auch während eines Heizbetriebs der jeweiligen Induktionsheizspule 215, ohne dass hier Unterbrechungen eingeplant werden müssen.

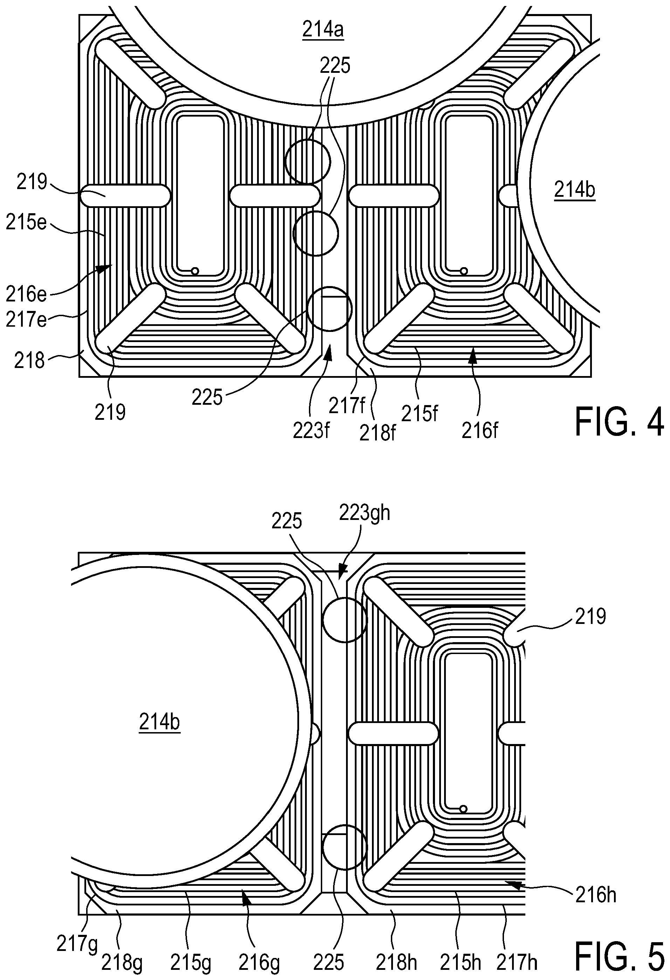

In der Fig. 4 ist in starker Vergrößerung bei einem Induktionskochfeld ähnlich der Fig. 3 bei den beiden Induktionsheizspulen 215e und 215f links unten dargestellt, wie die Abstände von Sensorspulen 225 über der linken Induktionsheizspule 215e, die sie teilweise bzw. überwiegend überlappen, zur äußersten Windung 217f der rechts benachbarten Induktionsheizspule 215f beispielhaft und unterschiedlich ausgestaltet sein können. Beim Beispiel der obersten Sensorspule 225 ist zu erkennen, dass sie mit ihrer äußersten Windung, die der dargestellten Begrenzung in runder Form entspricht, bis ungefähr zur Mitte des Nachbarbereichs 223ef reicht. Somit kann ihr Abstand zur äußersten Windung 217f bei 1 cm oder 2 cm bis zu 3 cm liegen und auf alle Fälle ausreichend groß sein. Die Induktionsheizspulen 215e und 215f könnten somit auch gegenphasig betrieben werden ohne negative Auswirkungen auf die Sensorspule 225.

Beim Beispiel der mittleren Sensorspule 225 ist zu erkennen, dass sie bis kurz vor die linke Kante des Trägers 218f reicht. Ihr Abstand zur äußersten Windung 217f ist somit zwischen 0,5 cm und 1 cm und wird als zu knapp angesehen, als dass die beiden Induktionsheizspulen 215e und 215f noch gegenphasig bzw. an unterschiedlichen Netzphasen betrieben werden könnten. Soll mit der Sensorspule 225 gemessen werden und werden sowohl die Induktionsheizspule 215e als auch die Induktionsheizspule 215f im Heizbetrieb betrieben, so muss für eine Messung an der Sensorspule 225 die Induktionsheizspule 215f kurzzeitig abgeschaltet werden wie zuvor erläutert. Dies ist zwar grundsätzlich möglich, wird aber als deutlich nachteilig angesehen.

Beim Beispiel der untersten Sensorspule 225 ist zu erkennen, dass sie die linke Induktionsheizspule 215e nur noch geringfügig überlappt, beispielsweise die äußersten zwei oder drei Windungen 216e, also um weniger als 1 cm oder um nur 0,5 cm. Sie reicht bis kurz vor die äußerste Windung 217f der rechten Induktionsheizspule 215f, so dass sie diese zwar noch nicht überlappt, ihr aber eben sehr nahekommt. Ein Abstand kann also 0,5 cm oder weniger betragen. Bei einem gegenphasigen Betrieb bzw. einem Betrieb an unterschiedlichen Netzphasen der beiden Induktionsheizspulen 215e und 215f ist deswegen auf alle Fälle ein Aussetzen des Betriebs mindestens einer der Induktionsheizspulen 215e und 215f zum Messen an der Sensorspule 225 notwendig.

In der Fig. 5 ist eine weitere Einbausituation dargestellt, bei der die beiden Sensorspulen 225 die rechte Induktionsheizspule 215h teilweise überdecken, wiederum deren zwei oder drei äußersten Windungen 216h. Sie überlappen den Nachbarbereich 223 und reichen bis an eine Außenkante des Trägers 218g der linken Induktionsheizspule 215g. Somit ist ihr Abstand zu einer äußersten Windung 217g etwa 0,5 cm, was wiederum als zu gering angesehen wird, um mit beiden Induktionsheizspulen 215g und 215h zu heizen, wenn mit diesen Sensorspulen 225 gemessen werden soll, zumindest wenn die Induktionsheizspulen gegenphasig bzw. an unterschiedlichen Netzphasen betrieben werden.

## Patentansprüche

1. Induktionskochfeld (11, 111, 211) mit
- einer Kochfeldplatte (12, 212),
- mehreren unter der Kochfeldplatte (12, 212) angeordneten Induktionsheizspulen (15, 115, 215) und
- mehreren unter der Kochfeldplatte (12, 212) angeordneten Sensorspulen (25, 125, 225),
wobei
- die Induktionsheizspulen (15, 115, 215) und die Sensorspulen (25, 125, 225) flach sind und in Ebenen verlaufen, die parallel zueinander und parallel zu der Kochfeldplatte (12, 212) sind,
- zwei benachbarte Induktionsheizspulen (15, 115, 215) mit ihren benachbarten Seiten einen Nachbarbereich (23, 123, 223) miteinander bilden,
**dadurch gekennzeichnet, dass**
- keine Sensorspule (25, 125, 225) in einem Nachbarbereich (23, 123, 223) über zwei Induktionsheizspulen (15, 115, 215) überlappt, die nicht-gleichphasig betrieben werden oder die an unterschiedlichen Netzphasen eines Netzanschlusses betrieben werden und jeweils von diesen unterschiedlichen Netzphasen mit Leistung versorgt werden.

2. Induktionskochfeld nach Anspruch 1, **dadurch gekennzeichnet, dass** ein Abstand zwischen zwei benachbarten Induktionsheizspulen (15, 115, 215) oder deren äußersten Windungen (217) kleiner als 10 mm ist, wobei eine über einer der Induktionsheizspulen (15, 115, 215) angeordnete Sensorspule (25, 125, 225) vollständig oberhalb dieser Induktionsheizspule (15, 115, 215) angeordnet ist, wobei die Sensorspule (25, 125, 225) von einer äußersten Windung (217) oder einem Außenrand der Induktionsheizspule (15, 115, 215) um mindestens 2 mm nach innen versetzt ist.

3. Induktionskochfeld nach einem der vorhergehenden Ansprüche, **dadurch gekennzeichnet, dass** sämtliche Sensorspulen (25, 125, 225) des Induktionskochfelds (11, 111, 211) in einem regelmäßigen Muster angeordnet sind, wobei immer zwei, drei oder vier Sensorspulen (25, 125, 225) über einer Induktionsheizspule (15, 115, 215) angeordnet sind.

4. Induktionskochfeld nach einem der vorhergehenden Ansprüche, **dadurch gekennzeichnet, dass** jeder Mittelpunkt aller Induktionsheizspulen (15, 115, 215) frei ist ohne Überdeckung durch eine Sensorspule (25, 125, 225).

5. Induktionskochfeld nach einem der vorhergehenden Ansprüche, **dadurch gekennzeichnet, dass** sämtliche Induktionsheizspulen (15, 115, 215) und/oder Sensorspulen (25, 125, 225) gleich groß ausgebildet sind.

6. Induktionskochfeld nach einem der vorhergehenden Ansprüche, **dadurch gekennzeichnet, dass** jede der Sensorspulen (25, 125, 225) 10 bis 60 Windungen aufweist.

7. Induktionskochfeld nach einem der vorhergehenden Ansprüche, **dadurch gekennzeichnet, dass** alle Sensorspulen (25, 125, 225) innerhalb der Flächen der Induktionsheizspulen (15, 115, 215) angeordnet sind.

8. Induktionskochfeld nach einem der vorhergehenden Ansprüche, **dadurch gekennzeichnet, dass** mehrere Sensorspulen (25, 125, 225) auf einem gemeinsamen Träger angeordnet sind.

9. Induktionskochfeld nach einem der vorhergehenden Ansprüche, **dadurch gekennzeichnet, dass** die Induktionsheizspulen (15, 115, 215) eine einzige Lage von Windungen (216) aufweisen und die Windungen (216) in einer einzigen Ebene verlaufen.

10. Induktionskochfeld nach einem der vorhergehenden Ansprüche, **dadurch gekennzeichnet, dass** die Sensorspulen (25, 125, 225) zwei Lagen von Windungen (216) aufeinander aufweisen, wobei die Sensorspulen (25, 125, 225) oberhalb der Ebene der Induktionsheizspulen (15, 115, 215) verlaufen.

## Claims

1. Induction cooktop (11, 111, 211) with
- a cooktop plate (12, 212),
- a plurality of induction heating coils (15, 115, 215) arranged beneath the cooktop plate (12, 212), and
- a plurality of sensor coils (25, 125, 225) arranged beneath the cooktop plate (12, 212),
wherein
- the induction heating coils (15, 115, 215) and the sensor coils (25, 125, 225) are flat and run in planes that are parallel to each other and parallel to the cooktop plate (12, 212),
- two adjacent induction heating coils (15, 115, 215) form a neighboring area (23, 123, 223) with their adjacent sides,
**characterized in that**
- no sensor coil (25, 125, 225) overlaps in a neighboring area (23, 123, 223) over two induction heating coils (15, 115, 215) that are operated out of phase or that are operated on different mains phases of a mains connection and are each supplied with power from these different mains phases.

2. Induction cooktop according to claim 1, **characterized in that** the distance between two adjacent induction heating coils (15, 115, 215) or their outermost windings (217) is less than 10 mm, wherein a sensor coil (25, 125, 215) is arranged completely above this induction heating coil (15, 115, 215), wherein the sensor coil (25, 125, 225) is offset inwardly by at least 2 mm from an outermost winding (217) or an outer edge of the induction heating coil (15, 115, 215).

3. Induction cooktop according to one of the preceding claims, **characterized in that** all sensor coils (25, 125, 225) of the induction cooktop (11, 111, 211) are arranged in a regular pattern, wherein two, three, or four sensor coils (25, 125, 225) are always arranged above an induction heating coil (15, 115, 215).

4. Induction cooktop according to one of the preceding claims, **characterized in that** each center point of all induction heating coils (15, 115, 215) is free without being covered by a sensor coil (25, 125, 225).

5. Induction cooktop according to one of the preceding claims, **characterized in that** all induction heating coils (15, 115, 215) and/or sensor coils (25, 125, 225) are of equal size.

6. Induction cooktop according to one of the preceding claims, **characterized in that** each of the sensor coils (25, 125, 225) has 10 to 60 turns.

7. Induction cooktop according to one of the preceding claims, **characterized in that** all sensor coils (25, 125, 225) are arranged within the areas of the induction heating coils (15, 115, 215).

8. Induction cooktop according to one of the preceding claims, **characterized in that** a plurality of sensor coils (25, 125, 225) are arranged on a common carrier.

9. Induction cooktop according to one of the preceding claims, **characterized in that** the induction heating coils (15, 115, 215) have a single layer of windings (216) and the windings (216) run in a single plane.

10. Induction cooktop according to one of the preceding claims, **characterized in that** the sensor coils (25, 125, 225) have two layers of windings (216) on top of each other, wherein the sensor coils (25, 125, 225) run above the plane of the induction heating coils (15, 115, 215).

## Revendications

1. Plaque de cuisson à induction (11, 111, 211) comprenant
- une plaque de cuisson (12, 212),
- plusieurs bobines de chauffage par induction (15, 115, 215) disposées sous la plaque de cuisson (12, 212) et
- plusieurs bobines de détection (25, 125, 225) disposées sous la plaque de cuisson (12, 212),
dans laquelle
- les bobines de chauffage par induction (15, 115, 215) et les bobines de détection (25, 125, 225) sont plates et s'étendent dans des plans parallèles entre eux et parallèles à la plaque de cuisson (12, 212),
- deux bobines de chauffage par induction adjacentes (15, 115, 215) forment avec leurs côtés adjacents une zone adjacente (23, 123, 223),
**caractérisé en ce que**
- aucune bobine de détection (25, 125, 225) ne chevauche dans une zone adjacente (23, 123, 223) deux bobines de chauffage par induction (15, 115, 215) qui fonctionnent de manière non synchrone ou qui fonctionnent sur des phases différentes d'un raccordement au réseau et sont alimentées en énergie par ces phases différentes du réseau.

2. Plaque de cuisson à induction selon la revendication 1, **caractérisée en ce que** la distance entre deux bobines de chauffage par induction adjacentes (15, 115, 215) ou leurs spires les plus extérieures (217) est inférieure à 10 mm, la bobine de détection (25, 125, 225) disposée au-dessus de l'une des bobines de chauffage par induction (15, 115, 215) est disposée entièrement au-dessus de cette bobine de chauffage par induction (15, 115, 215), la bobine de détection (25, 125, 225) étant décalée vers l'intérieur d'au moins 2 mm par rapport à une spire la plus extérieure (217) ou à un bord extérieur de la bobine de chauffage par induction (15, 115, 215).

3. Plaque de cuisson à induction selon l'une des revendications précédentes, **caractérisée en ce que** toutes les bobines de détection (25, 125, 225) de la plaque de cuisson à induction (11, 111, 211) sont disposées selon un motif régulier, deux, trois ou quatre bobines de détection (25, 125, 225) étant toujours disposées au-dessus d'une bobine de chauffage par induction (15, 115, 215).

4. Plaque de cuisson à induction selon l'une des revendications précédentes, **caractérisée en ce que** le centre de toutes les bobines de chauffage par induction (15, 115, 215) est libre, sans être recouvert par une bobine de détection (25, 125, 225).

5. Plaque de cuisson à induction selon l'une des revendications précédentes, **caractérisée en ce que** toutes les bobines de chauffage par induction (15, 115, 215) et/ou bobines de détection (25, 125, 225) sont de taille identique.

6. Plaque de cuisson à induction selon l'une des revendications précédentes, **caractérisée en ce que** chacune des bobines de détection (25, 125, 225) comporte 10 à 60 spires.

7. Plaque de cuisson à induction selon l'une des revendications précédentes, **caractérisée en ce que** toutes les bobines de détection (25, 125, 225) sont disposées à l'intérieur des surfaces des bobines de chauffage par induction (15, 115, 215).

8. Plaque de cuisson à induction selon l'une des revendications précédentes, **caractérisée en ce que** plusieurs bobines de détection (25, 125, 225) sont disposées sur un support commun.

9. Plaque de cuisson à induction selon l'une des revendications précédentes, **caractérisée en ce que** les bobines de chauffage par induction (15, 115, 215) comportent une seule couche de spires (216) et les spires (216) s'étendent dans un seul plan.

10. Plaque de cuisson à induction selon l'une des revendications précédentes, **caractérisée en ce que** les bobines de détection (25, 125, 225) comportent deux couches de spires (216) superposées, les bobines de détection (25, 125, 225) s'étendent au-dessus du plan des bobines de chauffage par induction (15, 115, 215).
